# EUROPÄISCHE PATENTSCHRIFT

(11) **EP 2 641 693 B1**
(45) Veröffentlichungstag und Bekanntmachung des Hinweises auf die Patenterteilung: **11.06.2014**
(21) Anmeldenummer: 13001278.4
(22) Anmeldetag: 13.03.2013
(51) Int. Cl.: B23Q 7/12, B23D 47/04, B23Q 7/04

(54) **Vorrichtung zur Zuordnung stabförmiger Werkstücke**
Device for assigning rod-shaped workpieces
Dispositif destiné à l'affectation de pièces à usiner en forme de tige

(30) Priorität: 19.03.2012 DE 102012005313
(43) Veröffentlichungstag der Anmeldung: 25.09.2013
(73) Patentinhaber: RSA cutting systems GmbH, 58239 Schwerte (DE)
(72) Erfinder: Berg, Thomas, 44149 Dortmund (DE); Feldhoff, Stephan, 51709 Marienheide (DE)
(74) Vertreter: Ostriga Sonnet Wirths & Vorwerk

(56) Entgegenhaltungen:
- FR-A1- 2 441 461
- US-A- 4 033 076

## Beschreibung

Die Erfindung betrifft eine Vorrichtung zur Zuordnung stabförmiger Werkstücke.

Eine derartige Vorrichtung ist bereits aus der DE 196 19 584 der Anmelderin bekannt. Darin ist eine Zuteileinrichtung mit mindestens einer mit einem V-förmigen Transportraum versehenen Fördereinrichtung offenbart, wobei die Zuteileinrichtung eine die Fallrichtung zeitweise freigebende Auflageebene aufweist und wobei unterhalb der bewegbaren Auflageebene eine den linearen Transport sicherstellende Einrichtung angeordnet ist, die oberhalb einer Zuführung zur zweiten Bearbeitungsmaschine in Fallrichtung zu öffnen ist.

Diese an sich vorteilhafte Vorrichtung wird jedoch als konstruktiv zu aufwändig empfunden.

Des Weiteren ist aus der FR 2 441 461 A1 eine Werkstückwechselvorrichtung für Werkzeugmaschinen mit einem einstückigen Greifer offenbart, der zwei. Teilgreifvorrichtungen zur Anordnung von jeweils zwei Werkstücken aufweist, wobei dieser Greifer insgesamt nur über eine Horizontalachse drehbar ist und nicht in unterschiedliche Funktionsstellungen gebracht werden kann.

Letztlich ist aus der US 4 033 076 A eine Be- und/oder Entladevorrichtung für eine Zylinderschleifmaschine mit lediglich zwei Führungseinrichtungen offenbart, bei der lediglich zu bearbeitende Werkstücke zum Schleifwerkzeug und zurück transportiert werden.

Ausgehend von dem zuletzt genannten Stand der Technik besteht die Aufgabe der Erfindung deshalb darin, eine neue Vorrichtung zur

Zuordnung stabförmiger Werkstücke, insbesondere Profilrohre zu schaffen, welche möglichst einfach aufgebaut und kostengünstiger herstellbar ist.

Die Lösung der Aufgabe ergibt sich aus den Merkmalen des Anspruchs 1.

Die erfindungsgemäße Vorrichtung ist insbesondere durch einen besonders einfachen Aufbau auf vorteilhafte Weise gekennzeichnet. Dies bezieht sich nicht nur auf die Konstruktion der Vorrichtung, sondern auch auf den Antrieb der erfindungsgemäßen Vorrichtung, da die einzelnen Führungseinrichtungen sehr einfach gelagert sind, jedoch jeweils separate Antriebsvorrichtungen aufweisen und somit unterschiedliche, für den Betrieb der Vorrichtung notwendige Stellungen erreichen können.

Bei einer vorteilhaften Ausführungsform der Erfindung können die Führungseinrichtungen in Abhängigkeit von ihrer Stellung als widerlagerartige Schnittunterstützung bzw. als Führungselemente für die Profile in unterschiedlichen Richtungen fungieren.

Auf vorteilhafte Weise können darüber hinaus die Führungseinrichtungen jeweils von mindestens einem Pneumatikzylinder angetrieben werden. Diese Art des Antriebs ist nicht nur sehr kostengünstig, sondern auch einfach zu steuern.

Letztlich kann die Vorrichtung zusätzlich mit einem als Pneumatikzylinder ausgebildeten Bündigdrücker versehen sein, mit dem die Profile in eine definierte Position in Längsachsrichtung bewegbar sind. Diese Ausführungsform hat den Vorteil, dass die der Entgratmaschine zuzuführenden Primärlängen in Längsachsrichtung zum Zwecke der Entgratung exakt positioniert werden können.

Weitere Vorteile der Erfindung ergeben sich aus der nachfolgenden Beschreibung eines Ausführungsbeispiels. Es zeigen:
Fig. 1 eine skizzenhafte Darstellung einer Gesamtanlage einschließlich einer Vorrichtung zur Zuordnung stabförmiger Werkstücke,
Fig. 2 eine Teildarstellung der Vorrichtung zur Zuordnung stabförmiger Werkstücke,
Fig. 3, 4 und 5 Einzelteildarstellungen der Vorrichtung zur Zuordnung stabförmiger Werkstücke gemäß Fig. 2,
Fig. 6 eine seitliche Darstellung der Vorrichtung zur Zuordnung stabförmiger Werkstücke in der Stellung "Schnittunterstützung",
Fig. 7 eine seitliche Darstellung der Vorrichtung zur Zuordnung stabförmiger Werkstücke in der Stellung "Entsorgung der Rest- und Kappstücke",
Fig. 8 und 9 eine seitliche Darstellung der Vorrichtung zur Zuordnung stabförmiger Werkstücke in den Stellungen "Transport Primärlängen" und
Fig. 10 eine seitliche Darstellung der Vorrichtung zur Zuordnung stabförmiger Werkstücke in der Stellung "Transport Sekundärlängen".

In den Zeichnungen ist eine Vorrichtung zur Zuordnung stabförmiger Werkstücke insgesamt mit der Bezugsziffer 10 bezeichnet.

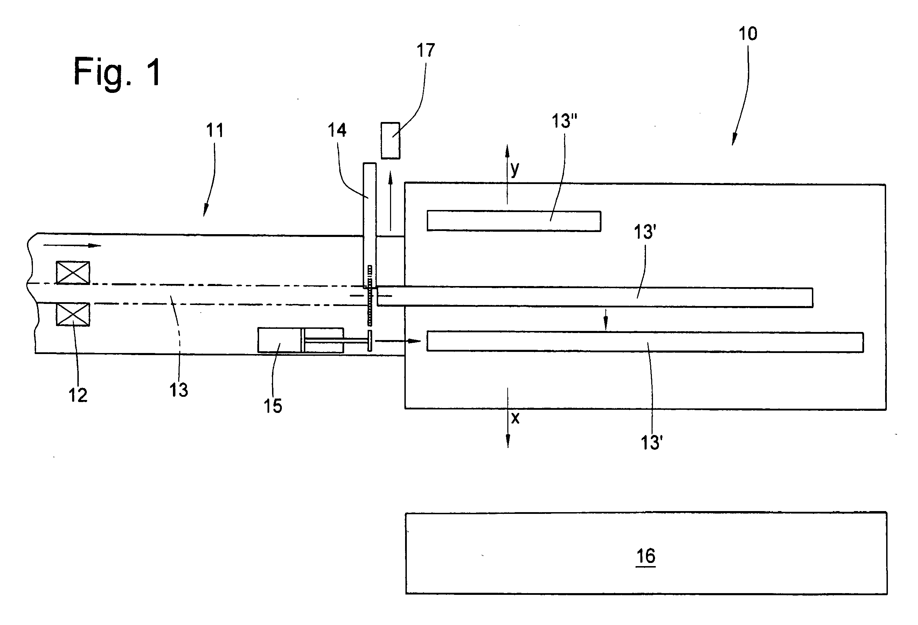

In der Fig. 1 ist skizzenhaft die Einordnung der Vorrichtung 10 zur Zuordnung stabförmiger Werkstücke in einer Gesamtanlage dargestellt. Man erkennt, dass der Vorrichtung 10 ein Vorschubtisch 11 einschließlich einer Vorschubzange 12 für ein Langprofil 13 sowie eine Säge 14 vorgeordnet ist.

Entsprechend der Vorgabe einer elektronischen Steuerung wird das Langprofil 13 mittels der Vorschubzange 12 um einen bestimmten Betrag in die Vorrichtung 10 zur Zuordnung stabförmiger Werkstücke geschoben. Danach erfolgt eine Abtrennung des Langprofils 13 in der gewünschten Länge durch die Säge 14, wobei ein Bündigdrücker 15, bei dem es sich um einen Pneumatikzylinder handelt, das zugeschnittene Langprofil 13' in Längsachsrichtung exakt für den Einlauf in eine Entgratvorrichtung 16 positioniert. Auf welche Weise das zugeschnittene Langprofil 13', welches als Primärlänge bezeichnet wird, in Primärrichtung x der Entgratvorrichtung 16 zugeführt wird, wird nachfolgend noch im Einzelnen beschrieben.

Aus der Fig. 1 ist darüber hinaus zu ersehen, dass ein Langprofil 13", die so genannte Sekundärlänge, welche nicht mehr die vorgegebene Schnittlänge des gewünschten Profils aufweist, auf ebenfalls nachfolgend beschriebene Weise in die Sekundärrichtung y transportiert wird.

Letztlich werden so genannte, kurze Kapp- und Reststücke 17 ebenfalls auf eine nachfolgend noch beschriebene Art und Weise in Schwerkraftrichtung entsorgt.

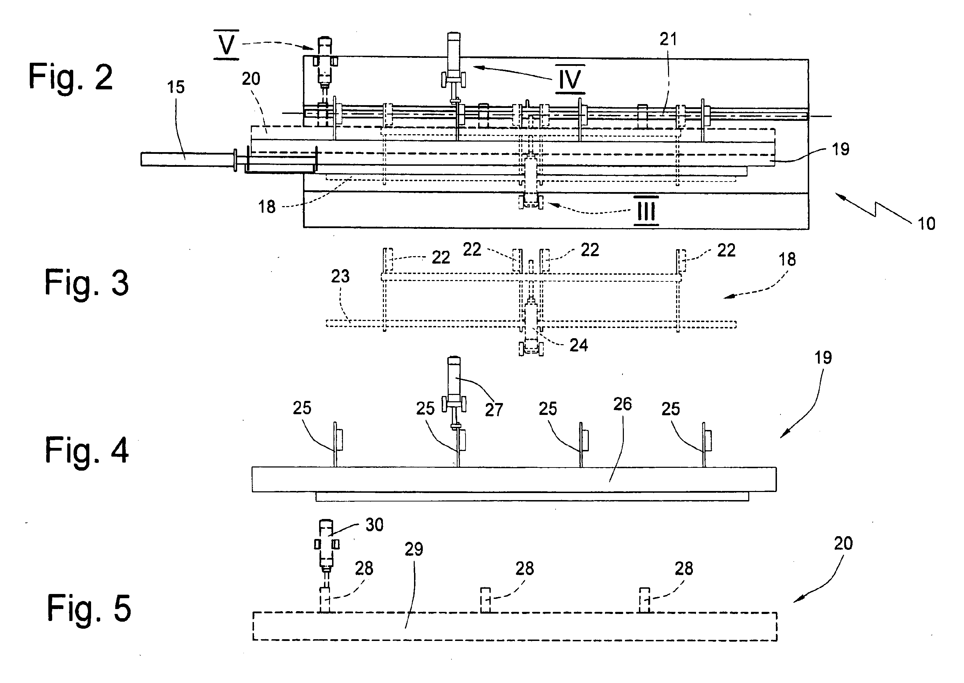

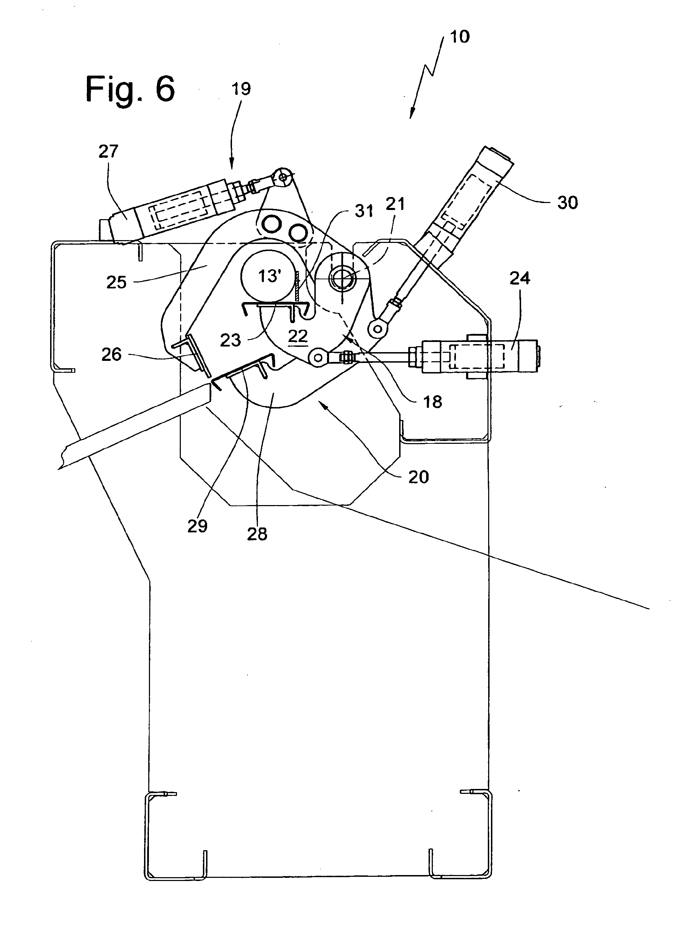

In der Fig. 2 ist eine Teildarstellung der Vorrichtung 10 zur Zuordnung stabförmiger Werkstücke dargestellt. Die Vorrichtung 10 wird im Wesentlichen aus den Führungseinrichtungen 18, 19 und 20 gebildet, wobei der Aufbau der Führungseinrichtungen 18, 19 und 20 insbesondere aus den Fig. 2 bis 5 in Verbindung beispielsweise mit der Fig. 6 zu erkennen ist.

Bevor die einzelnen Führungseinrichtungen 18, 19 und 20 beschrieben werden, bleibt hervorzuheben, dass diese bei der dargestellten Ausführungsform auf einer Achse 21 drehbar gelagert sind. An dieser Stelle wird darauf hingewiesen, dass selbstverständlich auch die nicht dargestellte Lagerung auf verschiedenen Achsen denkbar wäre.

Bei der nachfolgend nur noch als Schnittunterstützung 18 bezeichneten Führungseinrichtung sind vier Greiferarme 22, welche mit einem leistenartigen Profil 23 miteinander verbunden sind, gemeinsam auf der Achse 21 (s. Fig. 2) gelagert. Zwischen den beiden mittleren Greiferarmen 22 ist darüber hinaus zum Zwecke des Antriebs ein an den Greiferarmen 22 angreifender Pneumatikzylinder 24 vorhanden (s. Fig. 3).

Insbesondere aus den Zeichnungen Fig. 2, 4 und 6 ist darüber hinaus der Aufbau der Führungseinrichtung 19, nachfolgend Primärklappe genannt, zu erkennen. Auch die Primärklappe 19 weist vier Greiferarme 25 sowie ein diese verbindendes leistenartiges Profil 26 auf, wobei ein Greiferarm 25 über einen Pneumatikzylinder 27 angetrieben wird (s. Fig. 4).

Letztlich ist in den Fig. 2, 5 und 6 auch die Führungseinrichtung 20, nachfolgend Sekundärklappe genannt, gut dargestellt. Diese Sekundärklappe 20 weist drei Greiferarme 28 sowie ein gemeinsames leistenartiges Profil 29 und einen Pneumatikzylinder 30 auf (s. Fig. 5).

Die Funktionsweise der Vorrichtung 10 zur Zuordnung stabförmiger Werkstücke ist insbesondere in den Fig. 6 bis 10 zu erkennen.

In der Fig. 6 ist die Ausgangssituation dargestellt. Man erkennt das Profil 13, welches auf dem leistenartigen Profil 23 der Schnittunterstützung 18 lagert und zusätzlich an einer fest in der Vorrichtung 10 angeordneten, leistenartigen Schulter 31 anliegt.

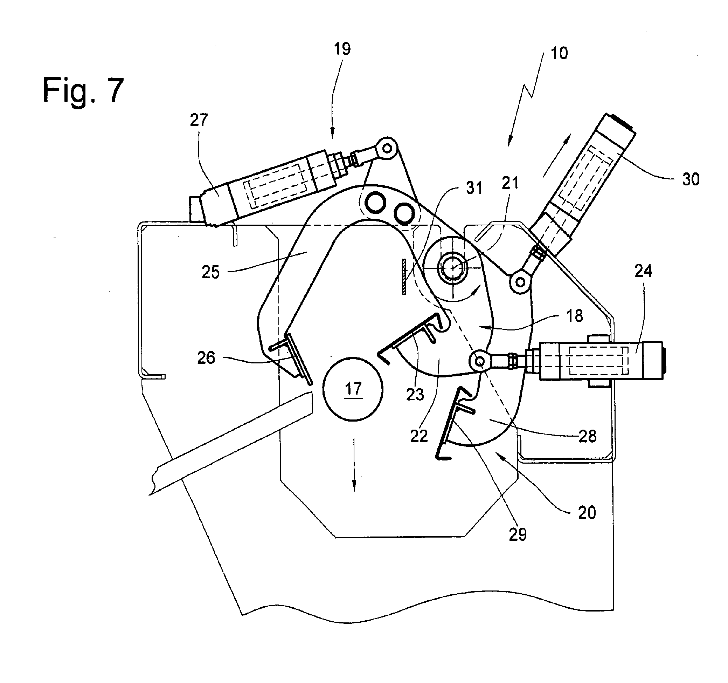

In der Fig. 7 ist die Stellung Entsorgung der Kapp- und Reststücke 17 dargestellt. Ausgehend von der Stellung in Fig. 6 ist zu erkennen, dass die Pneumatikzylinder 24, 27 und 30 die Schnittunterstützung 18, Primärklappe 19 und Sekundärklappe 20 in eine Stellung bewegt haben, in der das Kapp- und Reststück 17 in Schwerkraftrichtung entsorgt werden kann.

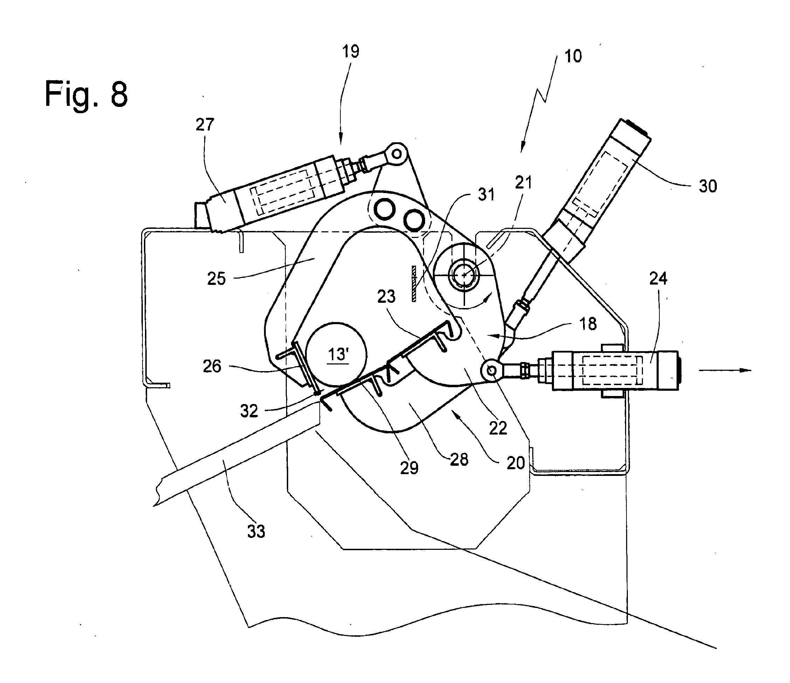

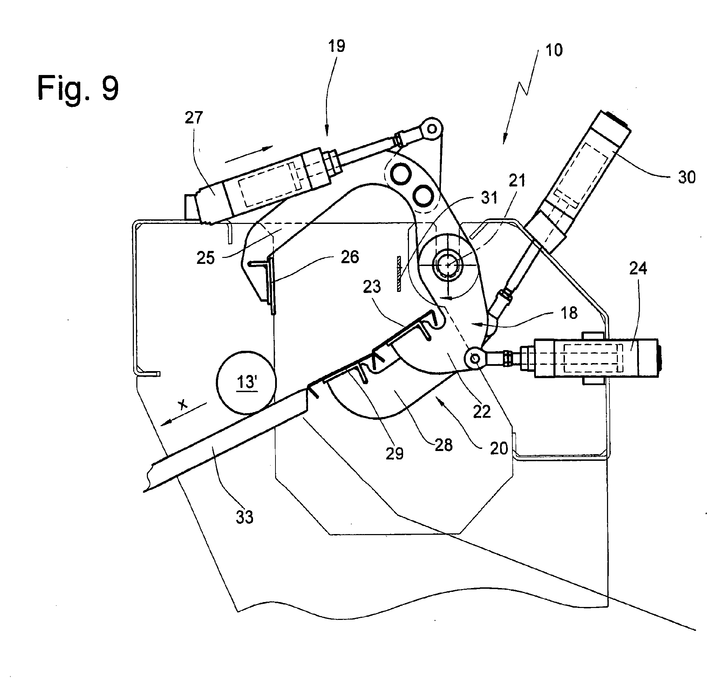

In den Fig. 8 und 9 ist wiederum ausgehend von der Grundstellung in Fig. 6 die Stellung der Vorrichtung 10 zur Zuordnung stabförmiger Werkstücke im Falle eines Transports einer Primärlänge 13' dargestellt. In einem ersten Schritt wird der Pneumatikzylinder 24 der Schnittunterstützung 18 angezogen, so dass sich das leistenartige Profil 23 neben das leistenartige Profil 29 legt, so dass die Primärlänge 13' sich in einen durch die leistenartigen Profile 26 und 29 gebildeten V-förmigen Aufnahmebereich 32 bewegt. Durch eine Schwenkbewegung der Primärklappe 19 wird - wie in Fig. 9 dargestellt - die Primärlänge 13' in Primärrichtung x über eine Abrollebene 33 der Entgratmaschine 16 zugeführt.

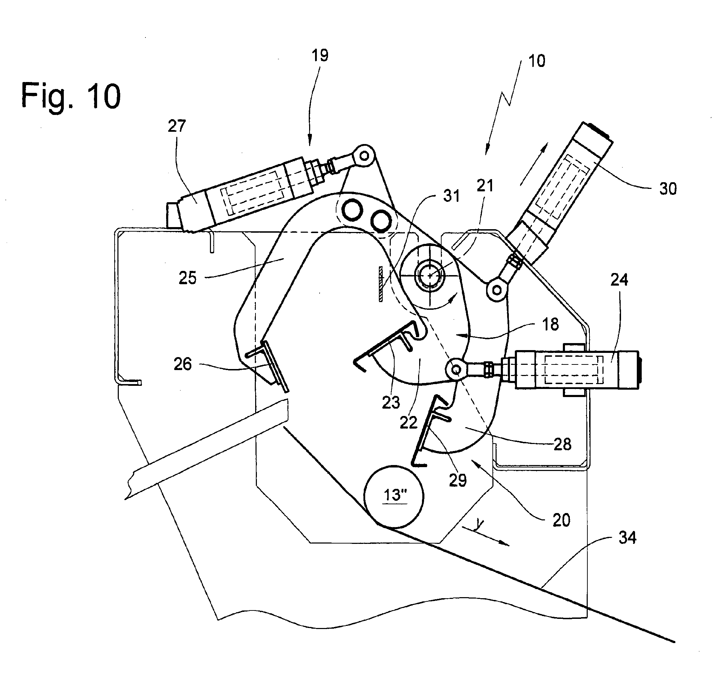

Letztlich zeigt die Fig. 10 - wiederum ausgehend von der Fig. 6 sowie der Fig. 8 -, wie die Sekundärlänge 13" sich in den V-förmigen Aufnahmebereich 31 zwischen den leistenartigen Profilen 26 und 29 bewegt, wobei dann - wie in Fig. 10 dargestellt - die Sekundärklappe 20 weggeschwenkt wird, so dass die Sekundärlänge 13" sich über eine Abrollebene 34 in Sekundärrichtung y bewegen kann.

### Bezugszeichenliste:

- 10: Vorrichtung
- 11: Vorschubtisch
- 12: Vorschubzange
- 13: Längsprofil 13' 13"
- 14: Säge
- 15: Bündigdrücker
- 16: Entgratvorrichtung
- 17: Kapp-/Reststück
- 18: Schnittunterstützung/Führungseinrichtung
- 19: Primärklappe/Führungseinrichtung
- 20: Sekundärklappe/Führungseinrichtung
- 21: gemeinsame Achse von 18, 19, 20
- 22: Greiferarme von 18
- 23: leistenartiges Profil von 18
- 24: Pneumatikzylinder von 18
- 25: Greiferarme von 19
- 26: leistenartiges Profil von 19
- 27: Pneumatikzylinder von 19
- 28: Greiferarme von 20
- 29: leistenartiges Profil von 20
- 30: Pneumatikzylinder von 20
- 31: leistenartige Schulter
- 32: Aufnahmebereich
- 33: Abrollebene
- 34: Abrollebene

### Sonderpositionen:

- x: Primärrichtung
- y: Sekundärrichtung

## Patentansprüche

1. Vorrichtung zur Zuordnung stabförmiger Werkstücke zum Transport in unterschiedliche Richtungen, insbesondere Profilrohre zwischen einer ersten und einer zweiten Bearbeitungsmaschine, vorzugsweise zwischen einer Sägeeinrichtung und einer Entgrateinrichtung, wobei die Vorrichtung (10) aus drei vorzugsweise gemeinsam auf der Achse (21) drehbar gelagerten Führungseinrichtungen (18, 19, 20) für die stabförmigen Werkstücke (13', 13", 17) gebildet wird, welche jeweils wenigstens zwei Greiferarme (22, 25, 28) aufweisen, die durch leistenartige Profile (23, 26, 29) verbunden sind, wobei jede Führungseinrichtung (18, 19, 20) durch jeweils wenigstens eine separate Antriebsvorrichtung (24, 27, 30) um die Lagerachse (21) herum in unterschiedliche Stellungen zueinander bewegbar sind und die Stellung der Führungseinrichtungen (18, 19, 20) zusammen den Transport der stabförmigen Werkstücke in unterschiedliche Richtungen hervorrufen.

2. Vorrichtung nach Anspruch 1, **dadurch gekennzeichnet, dass** die Führungseinrichtungen (18, 19, 20) in Abhängigkeit von ihrer Stellung als widerlagerartige Schnittunterstützung bzw. als Führungselement für die Profile in unterschiedliche Richtungen (x, y) fungieren.

3. Vorrichtung nach Anspruch 1 oder 2, **dadurch gekennzeichnet, dass** die Führungseinrichtungen (18, 19, 20) jeweils von mindestens einem Pneumatikzylinder (24, 27, 30) angetrieben werden.

4. Vorrichtung nach einem der vorangehenden Ansprüche, **dadurch gekennzeichnet, dass** die Vorrichtung (10) zusätzlich mit einem als Pneumatikzylinder ausgebildeten Bündigdrücker (15) versehen ist, mit dem die Profile (13') in eine definierte Position in Längsachsrichtung bewegbar sind.

## Claims

1. Device for coordinating rod-shaped workpieces for the transport in different directions of, in particular, special-section tubes between a first and a second processing machine, preferably between a sawing arrangement and a burr-removing arrangement, wherein said device (10) is formed from three guiding arrangements (18, 19, 20) for the rod-shaped workpieces (13', 13", 17), which guiding arrangements are preferably jointly mounted in a rotatable manner on the spindle (21) and each have at least two gripper arms (22, 25, 28) which are connected by strip-like profiles (23, 26, 29), wherein the guiding arrangements (18, 19, 20) are each movable, around the bearing spindle (21), into different positions in relation to each other by at least one separate driving device (24, 27, 30) in each case, and the positions of the guiding arrangements (18, 19, 20) together bring about the transporting of the rod-shaped workpieces in different directions.

2. Device according to Claim 1, **characterised in that** the guiding arrangements (18, 19, 20) function, depending upon their position, as an abutment-like cutting support or as a guiding element for the profiles in different directions (x, y).

3. Device according to Claim 1 or 2, **characterised in that** the guiding arrangements (18, 19, 20) are each driven by at least one pneumatic cylinder (24, 27, 30).

4. Device according to one of the preceding claims, **characterised in that** said device (10) is additionally provided with a flush-pusher (15) which is constructed as a pneumatic cylinder and by means of which the profiles (13') can be moved into a defined position in the direction of the longitudinal axis.

## Revendications

1. Dispositif destiné à l'affectation de pièces à usiner en forme de tige pour le transport dans différentes directions, en particulier de tubes profilés, entre une première et une deuxième machine de traitement, de préférence entre un dispositif de sciage et un dispositif d'ébavurage, le dispositif (10) étant formé de trois dispositifs de guidage (18 , 19, 20), montés de manière rotative de préférence ensemble sur l'axe (21), pour les pièces à usiner en forme de tige (13', 13", 17), qui présentent respectivement au moins deux bras de préhension (22, 25, 28) qui sont reliés par des profilés (23, 26, 29) en forme de bande, chaque dispositif de guidage (18, 19, 20) étant mutuellement mobile dans des positions différentes autour de l'axe de palier (21), par au moins un dispositif d'entraînement (24, 27, 30) séparé, et la position des dispositifs de guidage (18, 19, 20), ensemble, induisant le transport des pièces à usiner en forme de tige dans différentes directions.

2. Dispositif selon la revendication 1, **caractérisé en ce que** les éléments de guidage (18, 19, 20) agissent, en fonction de leur position, en tant que support de coupe de type butée ou en tant qu'élément de guidage pour les profilés, dans différentes directions (x, y).

3. Dispositif selon la revendication 1 ou 2, **caractérisé en ce que** les éléments de guidage (18, 19, 20) sont entraînés respectivement par au moins un vérin pneumatique (24, 27, 30).

4. Dispositif selon l'une des précédentes revendications, **caractérisé en ce que** le dispositif (10) est muni, en plus, d'un presseur affleurant (15) conçu en tant que vérin pneumatique avec lequel les profilés (13') sont mobiles dans une position définie, en direction axiale longitudinale.
